Europäisches Patentamt

European Patent Office

Office européen des brevets

(11) Publication number: **0 194 370**

**A1**

## (12) EUROPEAN PATENT APPLICATION

(21) Application number: **85301871.1**

(22) Date of filing: **15.03.85**

(51) Int. Cl.⁴: **G 01 F 11/06**

(43) Date of publication of application:
**17.09.86 Bulletin 86/38**

(84) Designated Contracting States:
**AT BE CH DE FR IT LI LU NL SE**

(71) Applicant: **MILK MARKETING BOARD**

**Thames Ditton Surrey KT7 OEL(GB)**

(72) Inventor: **Ranjith, H. M. P.**
**Milk Marketing Board Res. & Dev. Div. Crudgington**
**Telford Salop TF6 6HY(GB)**

(74) Representative: **Ayers, Martyn Lewis Stanley et al,**
**J.A. KEMP & CO. 14 South Square Gray's Inn**
**London, WC1R 5EU(GB)**

(54) **Device for controlling the flow or delivered quantity of a liquid.**

(57) A metering dispenser device 1 for supplying adjustable quantities of a product comprises a double-acting piston 4 whose stroke is adjusted by means of a stop 11. The position of the stop 11 is adjustable by means of arrangement which ensures that as the adjustment takes place in either direction, no new surfaces are exposed to the interior of the cylinder, thereby obviating the need for re-sterilising or re-cleaning when the stroke is reset. A valve having a similar feature is also disclosed.

Fig.1.

Croydon Printing Company Ltd.

- 1 -

## DESCRIPTION

TITLE:  DEVICE FOR CONTROLLING THE FLOW OR
DELIVERED QUANTITY OF A LIQUID

The present invention relates to a device for controlling the flow or delivered quantity of a liquid, and particularly, but not exclusively to a metering dispensing device.

A metering dispensing device for use in dispensing metered quantities of dairy products is known which has a piston driven by the product under pressure with a valving arrangement so that the stroke of the piston determines the quantity of product dispensed. In order to be able to adjust the volume dispensed, an adjustable stop is provided within the cylinder to limit the movement of the piston. In the known device, the stop comprises legs extending through the end wall of the piston and coupled to a drive plate outside the piston which can be driven towards or away from the end wall by means of a pin threaded through it and bearing against the end wall of the piston. A difficulty which arises in use of this device is that it needs to be sterilised prior to use and, once it has been sterilised, the legs of the adjuster can only be retracted further from the cylinder without having to re-sterilise the device. This is because if the adjuster legs were moved further into the cylinder, parts of their surfaces which were beyond the seals at the time the interior of the device was sterilised would be exposed to the product. This means, in effect, that the device has to be resterilised if the stroke of the piston is to be decreased and, in practice, this is not always convenient. Obviously a similar problem would arise with other product which required cleaning of the interior of the dispenser device prior to use.

A similar problem arises in the use of a variable flow valve in that, once sterilised, depending on its construction, the valve can usually only be operated in the direction to open it.

According to the present invention there is provided a device for controlling the flow or delivered quantity of a liquid, the device having a liquid flow path, and an adjustment element in the flowpath for controlling the flow or delivered quantity, the element being adjustable to increase or decrease the flow or delivered quantity by means which do not expose new surfaces to the liquid during adjustment in either direction.

The invention further provides a metering dispenser device for dispensing metered doses of a product comprising a piston and cylinder arrangement of which the piston is moveable for dispensing the product and an adjustable stop within the cylinder at one end to limit the stroke of the piston and thereby to define the volume of product dispensed per stroke, the stop being adjustable lengthwise of the cylinder by means of an arrangement which does not, in the course of the adjustment to increase or decrease the piston stroke, expose new surfaces to the product in the cylinder volume. Since no new surfaces are exposed to the product during the adjustment in either direction, an adjustment in either direction can be made without having to reclean or resterilise the device.

The stop may comprise an annular skirt closely surrounding an outlet tube for product displaced by the piston, the skirt closing off the outlet tube from the cylinder volume when in contact with the piston. This feature enables the dispenser device to satisfactorily dispense metered quantities of an aerated liquid product. It will be appreciated that in the conventional device, when the piston reaches the end of its travel, the liquid is still under pressure if it is aerated and this can cause extra product to be dispensed. However, by the use of the annular skirt, the outlet tube is sealed off from the cylinder volume and so this problem is reduced or eliminated.

The piston and cylinder arrangement may be double acting, the swept volumes to each side of the piston having respective outlets and wherein a change-over valve is provided for alternately connecting one of these outlets to a source of the product under pressure and the other to an outlet of the dispenser and vice versa whereby the pressure of the pressurised fluid acting on one side of the piston by virtue of the associated volume being connected to the source of pressurised product is used to drive the piston and displace the product from the other of the two volumes.

The invention will be further described by way of example with reference to the accompanying drawings in which:-

Figure 1 is a vertical sectional view through one embodiment of metering dispenser device in accordance with the present invention;

Figure 2 is a cross-section taken on line II-II of Figure 1;

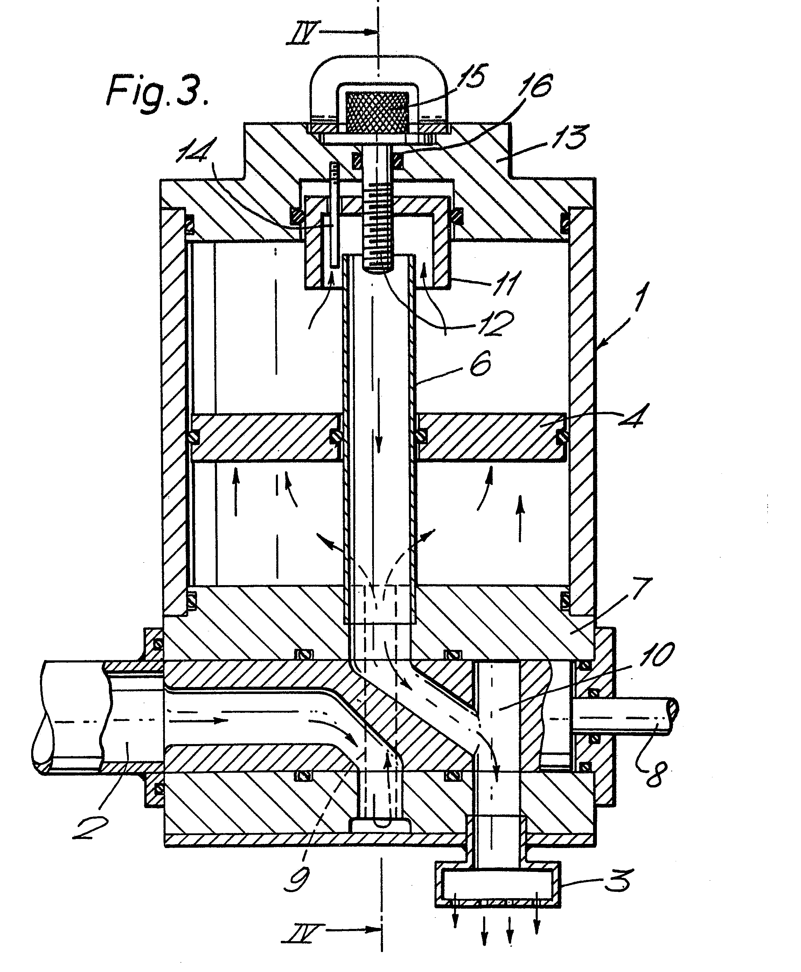

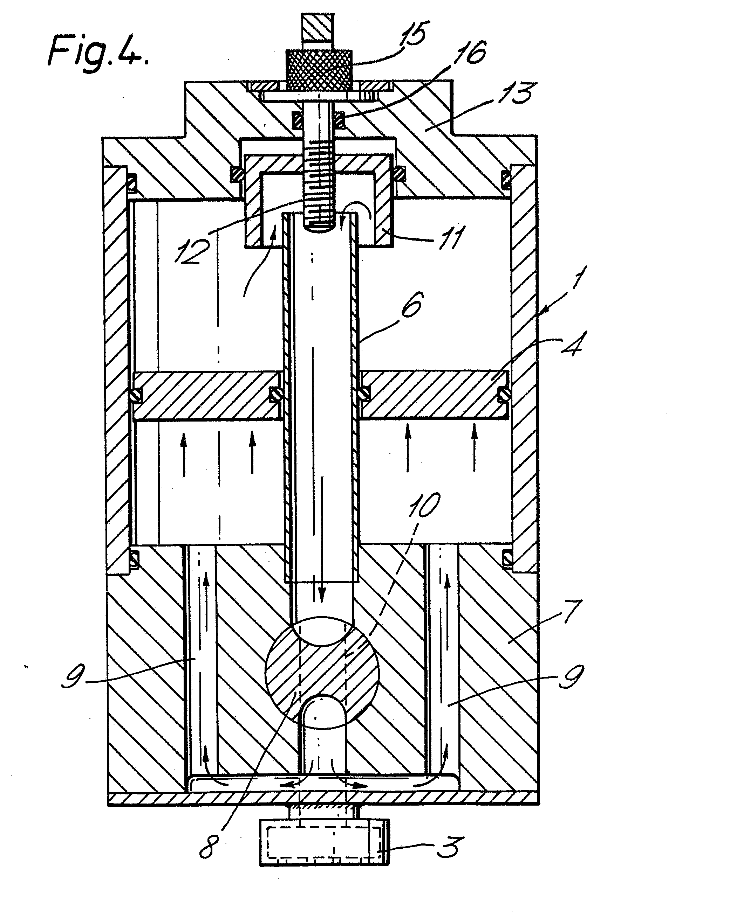

Figure 3 and 4 are views corresponding respectively to Figures 1 and 2 showing the piston of the device later in the operating cycle; and

Figure 5 shows somewhat schematically an embodiment of the invention as applied to a gate valve.

The figures show a double-acting piston and cylinder arrangement generally designated 1 for dispenser metered quantities of a liquid product delivered under pressure at 2 into a succession of product containers (not shown) via a dispensing nozzle 3. The product may be a dairy product such as milk or cream.

A piston 4 is mounted for vertical reciprocating movement within the cylinder 5 and is provided with O-ring seals against the peripheral walls of the cylinder and of a tube 6 which is sealing secured to the base 7 of the device. The tube 6 is open at its upper end to the upper interior volume X of the device.

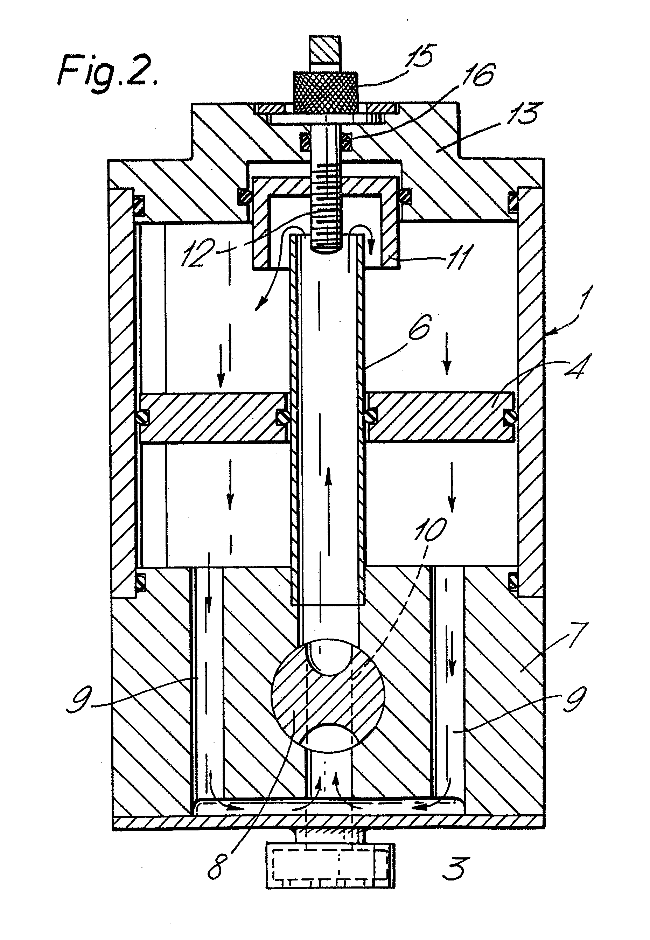

Located within the base 7 is a rotary change-over valve 8 which, depending on its rotational position, can deliver the product to the upper volume X or the lower volume Y, the latter by means of one or more vertical bores such as 9 in Figure 2. The rotary valve also has an outlet passage 10 which places the other of the two volumes in communication with the outlet nozzle 3.

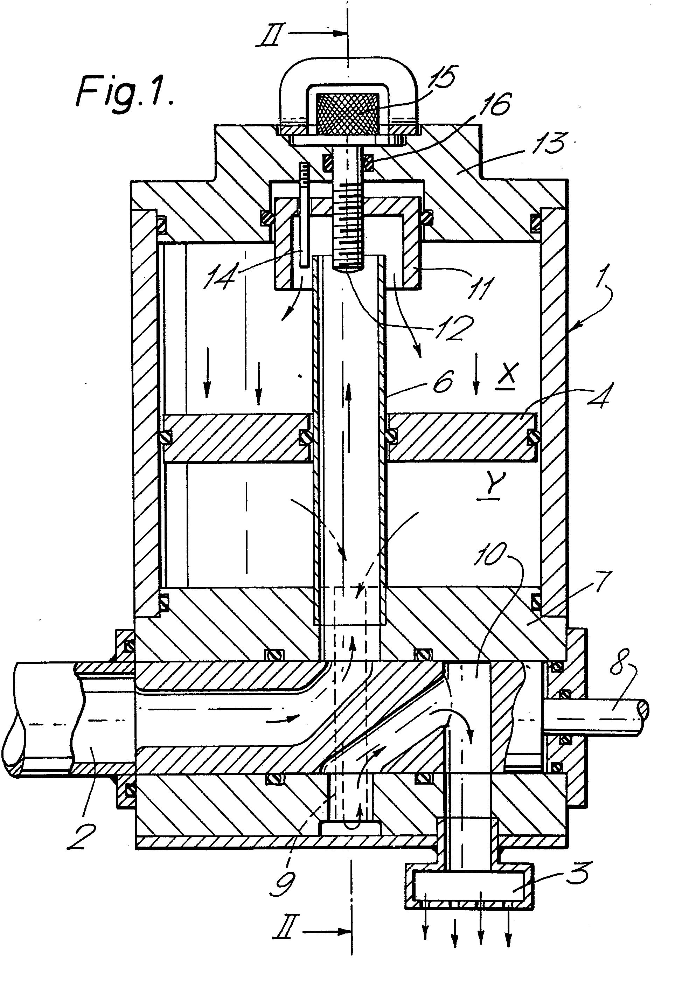

As will be readily apparent from the figures, when the rotary valve is in the position shown in Figures 1 and 2 the product is delivered via the tube 6 to the upper volume X thus displacing the piston 4 downwardly, discharging the product previously in the lower volume Y through the outlet passage 10 to the nozzle 3. Then, when the piston 4 reaches the lower limit of its travel, the rotary valve is rotated through 180 degrees whereupon the product enters the lower volume Y via the passages 9 forcing the piston for upwardly and discharging the product from the upper volume X to the nozzle 3 via the tube 6. The upper limit of movement of the piston 4, and thus the volume of product 4 dispensed during each working stroke is defined by an adjustable stop 11. This is in the form of an open-bottomed cylindrical cup mounted on an adjusting rod 12 coaxially with the piston 4. The rod 12 is rotatably mounted with respect to the end plate 13 so as to be rotatable, but not longitudinally moveable relative to the end plate. The lower part of the adjusting rod is threaded and threadly engages with the stop 11. A pin 14 prevents rotation of the stop 11 and thus when the adjusting element 15 is rotated the stop 11 moves up or down depending on the direction of rotation.

There may be sufficient clearance between the pin 14 and the hole in the stop 11 through which it extends to enable the sterilising/cleaning fluid to reach all of the pin's and the hole's surfaces. Furthermore one or more
holes may be provided in the wall of the stop 11,
preferably on its end face, and/or the seal shown in the
Figures around the stop 11 may be omitted if the products
is non-aerated, to enable the cleaning or sterilising fluid
to enter the space above the stop. Likewise, the
cleaning/sterilising fluid can penetrate between the
engaging threads of the rod 12 and stop 11.

The stop 11 is located for the most part in a
correspondingly shaped recess in the end plate 13 and is
sealed against it. One or more small holes are, however,
provided through the upper end wall of the stop 11 so that
cleaning or sterilising medium can enter the space above
the stop 11 up as far as the sealing ring 16.

The annular skirt of the stop 11 is dimensioned
so as to be a close fit around the tube 6. The lower end
wall of the skirt is parallel with the piston 4 so that
when the piston 4 reaches the upper limit of its travel,
the piston 4 seals against the stop 11 so that the upper
volume X is sealed from the interior volume of the tube 6.
This is of assistance where the product is aerated as it
prevents the pressure of the gas forcing the product from
the residual volume of the chamber X into the tube 6.

It will be appreciated that because of the manner
in which the stop 11 is moved, no new surface is presented
to the interior volume of the chamber X, irrespective of
the direction of movement of the stop 11 so that the device
can be adjusted to increase or decrease the dispensed
volume without having to reclean or resterilise the device.

When used for dispensing dairy products, it has
been found to be satisfactory to sterilise the device with
steam at 140 degrees for 15 minutes. Any other sterilising
medium could be used instead.

A suitable seal between the stop 11 and the
piston 4 can be achieved by any suitable means, for example
by having one or other of these elements made of PTFE or a similar material or by having an annular O-ring set into the mating surface of one of the elements, preferably the piston.

It will be appreciated that various other arrangements are possible for adjusting the position of the stop 11 so that no new surfaces are presented to the interior of the cylinder such as, for example, bellows and other types of pneumatic actuators.

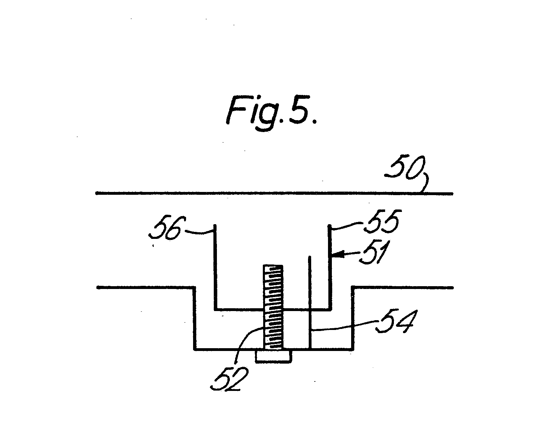

Figure 5 shows how the principle of the present invention may be applied to the control of a liquid through a pipe 50. This is achieved by means of a valve having a valve gate 51 threadly engaged with a drive bolt 52 which extends through the valve housing and can be driven from outside, the valve gate being prevented from rotation by means of a pin 54 corresponding to the pin 14 of the metering dispenser device described above. As shown, the valve gate has two spaced apart legs 55 and 56 although only a single one could be used instead.

## CLAIMS

1. A metering dispenser device for dispensing metered doses of a product comprising a piston and cylinder arrangement (1) of which the piston (4) is moveable for dispensing the product characterised in that an adjustable stop (11) is provided within the cylinder at one end to limit the stroke of the piston (4) and thereby to define the volume of product dispensed per stroke, the stop (11) being adjustable lengthwise of the cylinder by means of an arrangement (12-16) which does not, in the course of the adjustment to increase or decrease the piston stroke, expose new surfaces to the product in the cylinder volume.

2. A device according to claim 1 wherein the stop comprises an annular skirt (11) closely surrounding an outlet tube (6) for product displaced by the piston (4), the skirt (11) closing off the outlet tube (6) from the cylinder volume when in contact with the piston (4).

3. A device according to claim 1 or 2 wherein the outlet tube (6) for product displaced by the piston is located coaxially within the cylinder and has an open mouth just short of the end of the cylinder at which the stop (11) is provided.

4. A device according to claim 1, 2 or 3 wherein the position of the stop is adjustable by means of an adjustment rod (12) which is mounted at the cylinder end wall for rotational, but not longitudinal, movement and extends into the cylinder volume and threadly engages with the stop, means (14) being provided to prevent rotation of the stop with the rod, whereby when the rod is rotated from outside the cylinder, the stop is moved lengthwise within

it.

5. A device according to any one of claims 1 to 4 wherein the piston and cylinder arrangement is double-acting, the swept volumes to each side of the piston having respective outlets and wherein a change-over valve is provided for alternately connecting one of these outlets to a source of the product under pressure and the other to an outlet of the dispenser and vice versa whereby the pressure of the pressurised fluid acting on one side of the piston by virtue of the associated volume being connected to the source of pressurised product is used to drive the piston and displace the product from the other of the two volumes.

6. A device for controlling the flow or delivered quantity of a liquid, the device having a liquid flow path, and an adjustment element in the flowpath for controlling the flow or delivered quantity, the element being adjustable to increase or decrease the flow or delivered quantity by means which do not expose new surfaces to the liquid during adjustment in either direction.

7. A device according to claim 8 which is in the form of a valve, the adjustment element being the value.

8. A device according to claim 6 which is in the form of a metering dispenser for dispensing metered doses of the liquid.

Fig.1.

0194370

Fig.2.

Fig.3.

3/5

0194370

Fig.4.

# Fig.5.

50

56

55

51

54

52

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 439 835 (P.L. REID)<br>* Figures 2,10 * | 1,4,5 | G 01 F 11/06 |
| A | GB-A- 968 452 (THE DALE VALVE CO.)<br>* Figure 2 * | 1,6,8 | |
| A | US-A-3 107 079 (A.A. MEDDOCK)<br>* Figure 1 * | 1 | |
| A | CH-A- 514 129 (H. GAUTSCHI)<br><br>* Figure * | | |

---

TECHNICAL FIELDS
SEARCHED (Int. Cl.4)

G 01 F

The present search report has been drawn up for all claims

| Place of search | Date of completion of the search | Examiner |
|---|---|---|
| THE HAGUE | 11-11-1985 | NUIJTEN E.M. |